# EUROPEAN PATENT APPLICATION

(11) **EP 2 977 882 A1**
(43) Date of publication of application: **27.01.2016**
(21) Application number: 14460045.9
(22) Date of filing: 25.07.2014
(51) Int. Cl.: G06F 3/0488, G06F 3/041, G06F 3/023

(54) **Method and apparatus for identifying fingers in contact with a touch screen**

(71) Applicant: Motorola Solutions, Inc., Schaumburg, Illinois 60196 (US)
(72) Inventor: Mrowiec, Robert, 32-060 Liszki (PL); Wawrowski, Mariusz R., 32-125 Wawrzenczyce (PL)
(74) Representative: Wazynska, Miroslawa

(57) **Abstract**

A method and apparatus for identifying fingers in contact with a touch screen is provided herein. During operation, a device will attempt to identify a particular finger pattern in contact with the touch screen by identifying fingers in contact with a touch screen. The fingers in contact with the touch screen are preferably identified by determining a fingerprint for each finger in contact with the touch screen. When a fingerprint for all fingers cannot be identified, a fingerprint map will be used to determine those fingers most likely in contact with the touch screen.

## Description

### Field of the Invention

The present invention generally relates to touch-screen devices, and more particularly to a method and apparatus for identifying fingers in contact with a touch screen.

### Background of the Invention

Touch-sensitive displays (also known as "touch screens") are well known in the art. Touch screens are used in many electronic devices to display control buttons, graphics, text, and to provide a user interface through which a user may interact with the device. A touch screen detects and responds to contact on its surface. A device may display one or more control buttons, soft keys, menus, and other user-interface elements on the touch screen. A user may interact with the device by contacting the touch screen at locations corresponding to the user-interface (UI) elements with which they wish to interact.

One problem associated with using touch screens on portable devices is quickly and easily finding a desired user-interface element. Considering the rich functionalities applications can provide, there may be lots of UI elements (e.g. buttons, knobs, ... , etc.) on a display. A major problem is that it may be troublesome for user to find the right UI element in a timely manner, especially in a mission critical situation.

In order to address the above mentioned issue, past techniques have associated commands or applications based on user's current finger contact locations on the touch screen. Preferably, the UI elements are automatically associated with a certain finger, finger position, or finger pattern that is made by the user on the touch screen.

A problem exists in the above technique in that it is often difficult to identify a particular finger that has made contact with the touch screen. Similarly, if the fingers making contact with the touch screen cannot be uniquely identified, it may be difficult to identify any particular finger pattern making contact with the touch screen. Therefore a need exists for a method and apparatus for identifying fingers making contact with a touch screen that increases the probability of identifying the fingers making contact with the touch screen.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present invention.
FIG. 1 is block diagram illustrating a general operational environment, according to one embodiment of the present invention;
FIG. 2 through FIG. 6 illustrate placement of UI elements on a touch screen.
FIG. 7 illustrates identifying fingers in contact with a touch screen.
FIG. 8 is a flow chart showing identifying fingers in contact with a touch screen.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will further be appreciated that certain actions and/or steps may be described or depicted in a particular order of occurrence while those skilled in the art will understand that such specificity with respect to sequence is not actually required.

### DETAILED DESCRIPTION

In order to address the above-mentioned need a method and apparatus for identifying fingers in contact with a touch screen is provided herein. During operation, a device will attempt to identify a particular finger pattern in contact with the touch screen by identifying fingers in contact with a touch screen. The fingers in contact with the touch screen are preferably identified by determining a fingerprint for each finger in contact with the touch screen. When a fingerprint for all fingers cannot be identified, a fingerprint map will be used to determine those fingers most likely in contact with the touch screen.

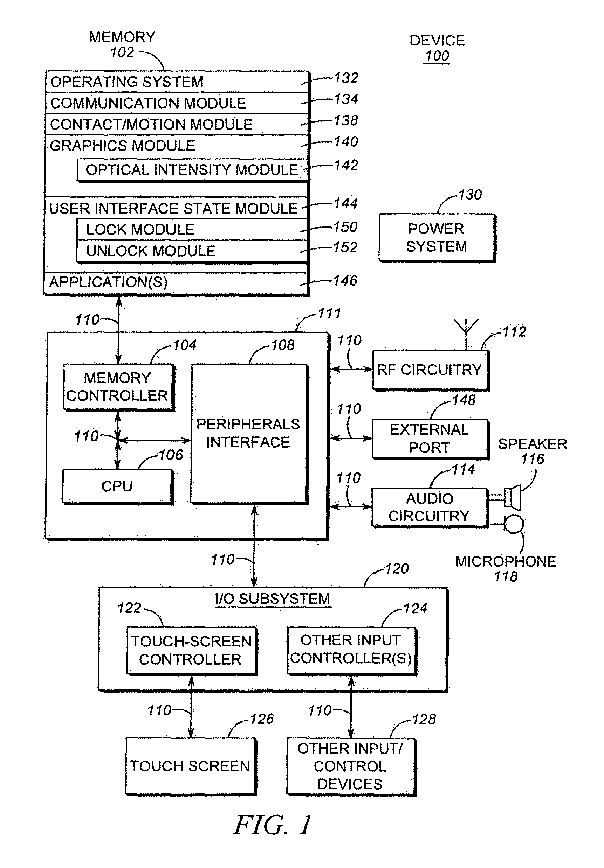

Turning now to the drawings, where like numerals designate like components, FIG. 1 is a block diagram of a portable electronic device that preferably comprises a touch screen 126. The device 100 includes a memory 102, a memory controller 104, one or more processing units (CPU's) 106, a peripherals interface 108, RF circuitry 112, audio circuitry 114, a speaker 116, a microphone 118, an input/output (I/O) subsystem 120, a touch screen 126, other input or control devices 128, and an external port 148. These components communicate over the one or more communication buses or signal lines 110. The device 100 can be any portable electronic device, including but not limited to a handheld computer, a tablet computer, a mobile phone, a police radio, a media player, a personal digital assistant (PDA), or the like, including a combination of two or more of these items. It should be appreciated that the device 100 is only one example of a portable electronic device 100, and that the device 100 may have more or fewer components than shown, or a different configuration of components. The various components shown in FIG. 1 may be implemented in hardware, software or a combination of both hardware and software, including one or more signal processing and/or application specific integrated circuits.

Memory 102 may include high speed random access memory and may also include non-volatile memory, such as one or more magnetic disk storage devices, flash memory devices, or other non-volatile solid state memory devices. In some embodiments, memory 102 may further include storage remotely located from the one or more processors 106, for instance network attached storage accessed via the RF circuitry 112 or external port 148 and a communications network (not shown) such as the Internet, intranet(s), Local Area Networks (LANs), Wide Local Area Networks (WLANs), Storage Area Networks (SANs) and the like, or any suitable combination thereof. Access to the memory 102 by other components of the device 100, such as the CPU 106 and the peripherals interface 108, may be controlled by memory controller 104.

The peripherals interface 108 couples the input and output peripherals of the device to the CPU 106 and the memory 102. The one or more processors 106 run various software programs and/or sets of instructions stored in the memory 102 to perform various functions for the device 100 and to process data.

In some embodiments, the peripherals interface 108, the CPU 106, and the memory controller 104 may be implemented on a single chip, such as a chip 111. In some other embodiments, they may be implemented on separate chips.

The RF (radio frequency) circuitry 112 receives and sends electromagnetic waves. The RF circuitry 112 converts electrical signals to/from electromagnetic waves and communicates with communications networks and other communications devices via the electromagnetic waves. The RF circuitry 112 may include well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. The RF circuitry 112 may communicate with the networks, such as the Internet, also referred to as the World Wide Web (WWW), an Intranet and/or a wireless network, such as a cellular telephone network, a wireless local area network (LAN) and/or a metropolitan area network (MAN), and other devices by wireless communication. The wireless communication may use any of a plurality of communications standards, protocols and technologies, including but not limited to Global System for Mobile Communications (GSM), Enhanced Data GSM Environment (EDGE), wideband code division multiple access (W-CDMA), code division multiple access (CDMA), time division multiple access (TDMA), Bluetooth, Wireless Fidelity (Wi-Fi) (e.g., IEEE 802.11 a, IEEE 802.11 b, IEEE 802.11 g and/or IEEE 802.11 n), voice over Internet Protocol (VoIP), Wi-MAX, a protocol for email, instant messaging, and/or Short Message Service (SMS)), or any other suitable communication protocol, including communication protocols not yet developed as of the filing date of this document.

The audio circuitry 114, the speaker 116, and the microphone 118 provide an audio interface between a user and the device 100. The audio circuitry 114 receives audio data from the peripherals interface 108, converts the audio data to an electrical signal, and transmits the electrical signal to the speaker 116. The speaker converts the electrical signal to human-audible sound waves. The audio circuitry 114 also receives electrical signals converted by the microphone 116 from sound waves. The audio circuitry 114 converts the electrical signal to audio data and transmits the audio data to the peripherals interface 108 for processing. Audio data may be may be retrieved from and/or transmitted to the memory 102 and/or the RF circuitry 112 by the peripherals interface 108. In some embodiments, the audio circuitry 114 also includes a headset jack (not shown). The headset jack provides an interface between the audio circuitry 114 and removable audio input/output peripherals, such as output-only headphones or a headset with both output (headphone for one or both ears) and input (microphone).

The I/O subsystem 120 provides the interface between input/output peripherals on the device 100, such as the touch screen 126 and other input/control devices 128, and the peripherals interface 108. The I/O subsystem 120 includes a touch-screen controller 122 and one or more input controllers 124 for other input or control devices. The one or more input controllers 124 receive/send electrical signals from/to other input or control devices 128. The other input/control devices 128 may include physical buttons (e.g., push buttons, rocker buttons, etc.), dials, slider switches, sticks, and so forth.

The touch screen 126 provides both an output interface and an input interface between the device and a user. The touch-screen controller 122 receives/sends electrical signals from/to the touch screen 126. The touch screen 126 displays visual output to the user. The visual output may include text, graphics, video, and any combination thereof. Some or all of the visual output may correspond to user-interface objects, further details of which are described below.

The touch screen 126 also accepts input from the user based on haptic and/or tactile contact. The touch screen 126 forms a touch-sensitive surface that accepts user input. The touch screen 126 and the touch screen controller 122 (along with any associated modules and/or sets of instructions in the memory 102) detects contact (and any movement or break of the contact) on the touch screen 126 and converts the detected contact into interaction with user-interface objects, such as one or more commands or user-interface elements (e.g., soft keys), that are displayed on the touch screen. In an exemplary embodiment, a point of contact between the touch screen 126 and the user corresponds to one or more finger digits of the user. The touch screen 126 may use LCD (liquid crystal display) technology, or LPD (light emitting polymer display) technology, although other display technologies may be used in other embodiments. The touch screen 126 and touch screen controller 122 may detect contact and any movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen 126. The touch-sensitive display may be analogous to the multi-touch sensitive tablets described in the following U.S. Pat. Nos. 6,323,846 (Westerman et al.), 6,570,557 (Westerman et al.), and/or 6,677,932 (Westerman), and/or U.S. Patent Publication 2002/0015024A1. The touch screen 126 displays visual output from the portable device, whereas touch sensitive tablets do not provide visual output. The touch screen 126 may have a resolution in excess of 100 dpi. In an exemplary embodiment, the touch screen 126 may have a resolution of approximately 168 dpi. The user may make contact with the touch screen 126 using any suitable object or appendage, such as a stylus, finger, and so forth.

In some embodiments, in addition to the touch screen, the device 100 may include a touchpad (not shown) for activating or deactivating particular functions. In some embodiments, the touchpad is a touch-sensitive area of the device that, unlike the touch screen, does not display visual output. The touchpad may be a touch-sensitive surface that is separate from the touch screen 126 or an extension of the touch-sensitive surface formed by the touch screen 126.

The device 100 also includes a power system 130 for powering the various components. The power system 130 may include a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

In some embodiments, the software components include an operating system 132, a communication module (or set of instructions) 134, an electronic contact module (or set of instructions) 138, a graphics module (or set of instructions) 140, a user interface state module (or set of instructions) 144, and one or more applications (or set of instructions) 146.

The operating system 132 (e.g., Darwin, RTXC, LINUX, UNIX, OS X, WINDOWS, or an embedded operating system such as VxWorks) includes various software components and/or drivers for controlling and managing general system tasks (e.g., memory management, storage device control, power management, etc.) and facilitates communication between various hardware and software components.

The communication module 134 facilitates communication with other devices over one or more external ports 148 and also includes various software components for handling data received by the RF circuitry 112 and/or the external port 148. The external port 148 (e.g., Universal Serial Bus (USB), FIREWIRE, etc.) is adapted for coupling directly to other devices or indirectly over a network (e.g., the Internet, wireless LAN, etc.).

The contact/contact module 138 detects contact with the touch screen 126, in conjunction with the touch-screen controller 122. The contact/contact module 138 includes various software components for performing various operations related to detection of contact with the touch screen 126, such as determining if contact has occurred, determining fingerprints for those digits in contact with the touch screen, determining if there is movement of the contact and tracking the movement across the touch screen, and determining if the contact has been broken (i.e., if the contact has ceased). Determining movement of the point of contact may include determining speed (magnitude), velocity (magnitude and direction), and/or an acceleration (including magnitude and/or direction) of the point of contact. In some embodiments, the contact/contact module 126 and the touch screen controller 122 also detects contact on the touchpad.

The graphics module 140 includes various known software components for rendering and displaying graphics on the touch screen 126. Note that the term "graphics" includes any object that can be displayed to a user, including without limitation text, web pages, icons (such as user-interface objects including soft keys), digital images, videos, animations and the like.

In some embodiments, the graphics module 140 includes an optical intensity module 142. The optical intensity module 142 controls the optical intensity of graphical objects, such as user-interface objects, displayed on the touch screen 126. Controlling the optical intensity may include increasing or decreasing the optical intensity of a graphical object. In some embodiments, the increase or decrease may follow predefined functions.

The user interface state module 144 controls the user interface state of the device 100. The user interface state module 144 may include a lock module 150 and an unlock module 152. The lock module detects satisfaction of any of one or more conditions to transition the device 100 to a user-interface lock state and to transition the device 100 to the lock state. The unlock module detects satisfaction of any of one or more conditions to transition the device to a user-interface unlock state and to transition the device 100 to the unlock state.

The one or more applications 130 can include any applications installed on the device 100, including without limitation, a browser, address book, contact list, email, instant messaging, word processing, keyboard emulation, widgets, JAVA-enabled applications, encryption, digital rights management, voice recognition, voice replication, location determination capability (such as that provided by the global positioning system (GPS)), a music player (which plays back recorded music stored in one or more files, such as MP3 or AAC files), etc.

In some embodiments, the device 100 may include the functionality of an MP3 player, such as an iPod (trademark of Apple Computer, Inc.). The device 100 may, therefore, include a 36-pin connector that is compatible with the iPod. In some embodiments, the device 100 may include one or more optional optical sensors (not shown), such as CMOS or CCD image sensors, for use in imaging applications.

In some embodiments, the device 100 is a device where operation of a predefined set of functions on the device is performed exclusively through the touch screen 126 and, if included on the device 100, the touchpad. By using the touch screen and touchpad as the primary input/control device for operation of the device 100, the number of physical input/control devices (such as push buttons, dials, and the like) on the device 100 may be reduced. In one embodiment, the device 100 includes the touch screen 126, the touchpad, a push button for powering the device on/off and locking the device, a volume adjustment rocker button and a slider switch for toggling ringer profiles. The push button may be used to turn the power on/off on the device by depressing the button and holding the button in the depressed state for a predefined time interval, or may be used to lock the device by depressing the button and releasing the button before the predefined time interval has elapsed. In an alternative embodiment, the device 100 also may accept verbal input for activation or deactivation of some functions through the microphone 118.

The predefined set of functions that are performed exclusively through the touch screen and the touchpad include navigation between user interfaces. In some embodiments, the touchpad, when touched by the user, navigates the device 100 to a main, home, or root menu from any user interface that may be displayed on the device 100. In such embodiments, the touchpad may be referred to as a "menu button." In some other embodiments, the menu button may be a physical push button or other physical input/control device instead of a touchpad.

The device 100 may have a plurality of user interface states. A user interface state is a state in which the device 100 responds in a predefined manner to user input. In some embodiments, the plurality of user interface states includes a user-interface lock state and a user-interface unlock state. In some embodiments, the plurality of user interface states includes states for a plurality of applications.

As described above, one problem associated with using touch screens 126 on portable devices is quickly and easily finding a desired user-interface element. In particular it may be troublesome for user to find the right UI element with a timely manner, especially in a mission critical situation. In order to address this need, contact module 138 will detect a user's current finger positions on touch screen 126 and then instruct graphics module 140 to place predefined UI elements where a person's fingers make contact with the touch screen. The above technique makes it much easier and more time-efficient for a user to find a particular UI element.

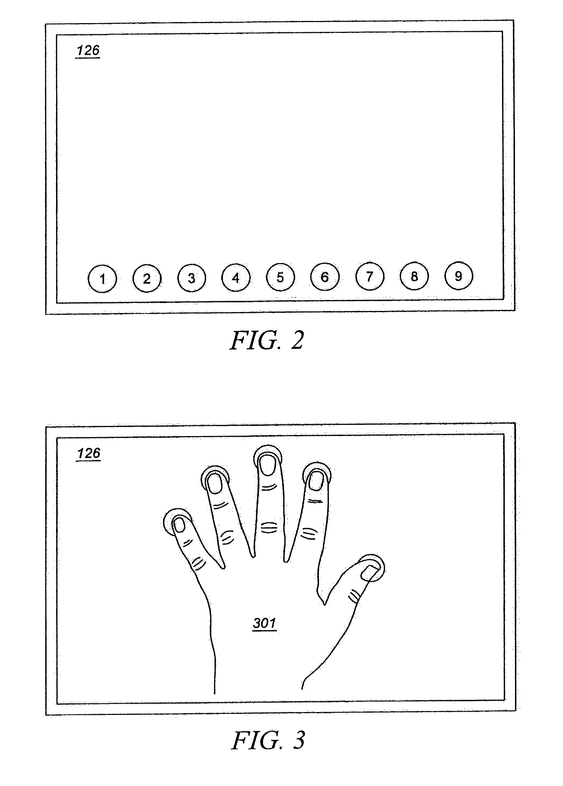

The above technique is illustrated in FIG. 2 and in International Patent Application No. PCT /CN2013/071584, entitled "METHOD AND APPARATUS FOR MANAGING USER INTERFACE ELEMENTS ON A TOUCH-SCREEN DEVICE" incorporated by reference herein. As shown in FIG. 2, touch screen 126 has UI elements 1-9 displayed. For ease of illustration a plurality of UI elements 1-9 are displayed as circles, however, one of ordinary skill in the art will recognize that UI elements 1-9 can take an infinite number of shapes and sizes. UI elements 1-9 may all be a similar shape and size, or may be different shapes and sizes. Additionally, while only 9 UI elements are shown lying along an edge of touch screen 126, any number of UI elements may be present on touch screen 126, lying in any number of patterns and positions.

As is known in the art, UI elements 1-9 represent places where the user may interact, the interaction of which causes contact module 138 to instruct CPU 106 to execute a particular function, application, or program. UI elements 1-9 may sometimes be referred to as controls or widgets. These controls or widgets may take any form to execute any function, some of which are described below:

Window - UI elements 1-9 may take the form of a paper-like rectangle that represents a "window" into a document, form, or design area.

Text box- UI elements 1-9 may take the form of a box in which to enter text or numbers.

Button- UI elements 1-9 may take the form of an equivalent to a push-button as found on mechanical or electronic instruments. Interaction with UI elements in this form serve to control functions on device 100. For example UI element 1 may serve to control a volume function for speaker 116, while UI element 2 may serve to key microphone 118.

Hyperlink- UI elements 1-9 may take the form of text with some kind of indicator (usually underlining and/or color) that indicates that clicking it will take one to another screen or page.

Drop-down list or scroll bar- UI elements 1-9 may take the form of a list of items from which to select. The list normally only displays items when a special button or indicator is clicked.

List box- UI elements 1-9 may take the form of a user-interface widget that allows the user to select one or more items from a list contained within a static, multiple line text box.

Combo box- UI elements 1-9 may take the form of a combination of a drop-down list or list box and a single-line textbox, allowing the user to either type a value directly into the control or choose from the list of existing options.

Check box- UI elements 1-9 may take the form of a box which indicates an "on" or "off" state via a check mark 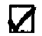 or a cross 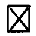 . Sometimes can appear in an intermediate state (shaded or with a dash) to indicate mixed status of multiple objects.

Radio button- UI elements 1-9 may take the form of a radio button, similar to a check-box, except that only one item in a group can be selected. Its name comes from the mechanical push-button group on a car radio receiver. Selecting a new item from the group's buttons also deselects the previously selected button.

Cycle button or control knob- UI elements 1-9 may take the form of a button or knob that cycles its content through two or more values, thus enabling selection of one from a group of items.

Datagrid- UI elements 1-9 may take the form of a spreadsheet-like grid that allows numbers or text to be entered in rows and columns.

Switch - UI elements 1-9 may take the form of a switch such that activation of a particular UI element 1-9 toggles a device state. For example, UI element 1 may take the form of an on/off switch that controls power to device 100.

As described above, during operation contact module 138 will detect a user's current finger positions on touch screen 126 and then instruct graphics module 140 to place a plurality of predefined UI elements where a person's fingers make contact with the touch screen. Each UI element will be associated with a predefined finger such that, for example, UI element 1 may be associated with a thumb on a right hand, UI element 2 may be associated with an index finger on the right hand, etc. The above technique makes it much easier and more time-efficient for a user to find a particular UI element since all a user needs to do is to make contact with the touch screen with a digit(s) to have the associated UI element(s) positioned at the contact point.

All available UI elements can be configured to work under this new mode or they can be selected by the user to work under this mode. For example, a user may select a first plurality of UI elements to be assigned to the user contact points by either selecting them individually or dragging a "box" around them. Once selected, these elements will be placed where finger positions are detected. This is illustrated in FIG. 3.

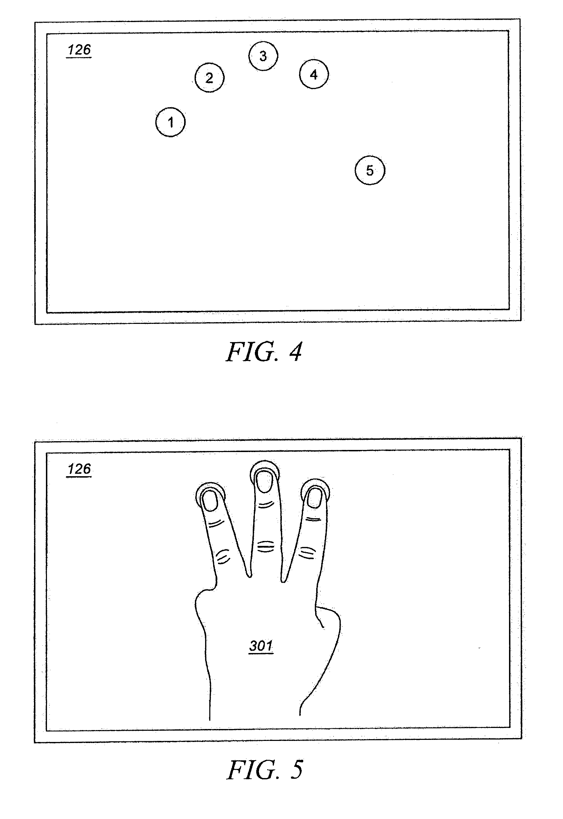

As shown in FIG. 3, a user's hand 301 has been placed in contact with touch screen 126 such that five finger positions make simultaneous contact with touch screen 126. Once detected by contact module 138, the simultaneous finger identities and positions are determined by their associated fingerprints and contact points. This information is provided to graphics module 140. Graphics module 140 then places a plurality of selected UI elements where each finger made contact with touch screen 126. As indicated above, each finger has an associated UI element. This is illustrated in FIG. 4.

In FIG. 4 it is assumed that a user has pre-selected UI elements 1-5. As shown in FIG. 4, pre-selected UI elements 1-5 are positioned on touch screen 126 such that a single UI element is placed at each previous simultaneous finger contact point when a user removes their fingers from screen 126. Thus, as a user touches the screen in a simultaneous manner with multiple fingers, the fingers are identified, the locations of each finger contact is identified, and buttons (UI elements) moves to the associated finger contact points. If a user again touches the screen as described above, the buttons may be repositioned in accordance with the second touching.

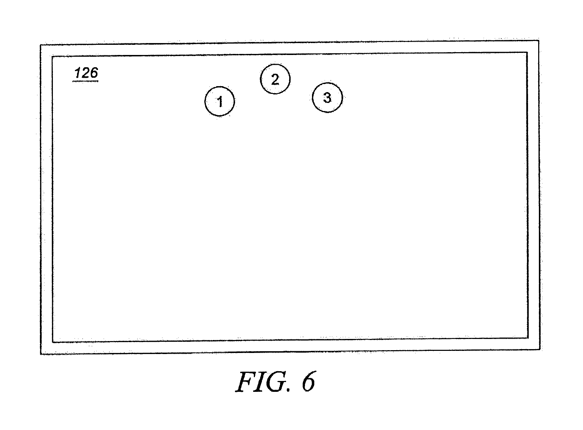

FIG. 5 and FIG. 6 illustrate the above. The result of the second touching is shown in FIG. 6 where three UI elements are placed where the three fingers made contact with screen 126. As discussed, each UI element 1-9 may be assigned a finger so that when UI elements need to be placed on screen 126, graphics module 140 will UI elements at the assigned finger contact point.

Thus, the determination of what UI elements to place at each finger position may be made by the user assigning a finger for each UI element. For example, element 1 may be placed under a first finger (e.g., a thumb). Element 2 may be placed under a second finger (e.g., an index finger).

As discussed above, a problem exists in the above technique in that it is often difficult to identify a particular finger that has made contact with the touch screen. Similarly, if the fingers making contact with the touch screen cannot be uniquely identified, it may be difficult to identify any particular finger pattern making contact with the touch screen. In order to address this issue, contact module 138 will attempt to identify as many fingerprints as possible for those digits making contact with touch screen 126 by determining finger prints for those digits making contact with touch screen 126. In some situations, only a subset of fingers making contact with touch screen 126 may be identified in this manner.

The positions of those fingers identified via their fingerprints will be used to infer the identity of those digits not identified by their fingerprints. This is accomplished by contact module 138 determining a pattern of the fingers making contact with touch screen 126, identifying as many of the fingers as possible through their fingerprint, and using a pre-stored finger pattern to infer the identities of unidentified fingers. It is assumed by contact module 138 that all fingers making contact with touch screen 126 will need to do so within a predetermined amount of time (e.g., 1 second) in order to determine a finger pattern.

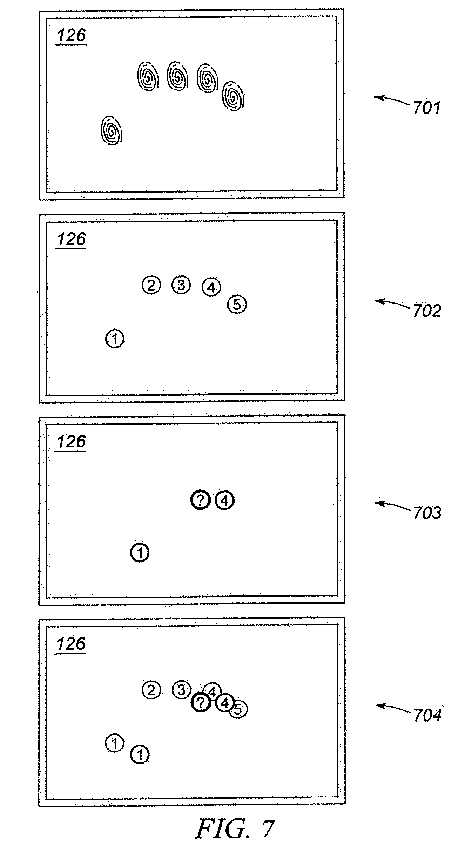

The pre-stored finger pattern may be acquired during a configuration process as shown in FIG. 7. At 701, when configuring device 100, a user will be instructed to place all the fingers of one hand on the touch screen. This is repeated for each hand. Contact module 138 will learn the fingerprints of the user's fingers and the relative position of each finger *to each other.* This information is stored in storage 104. Thus, storage 104 stores relative finger positions with respect to each other (shown as map 702) along with a fingerprint for each finger. The combination of fingerprint data and relative locations of each finger with respect to *each other* will be referred to as a fingerprint map 702. Thus, fingerprint map 702 comprises a plurality of fingers identified by their fingerprint, and the relative location of each finger with respect to each other. For example, map 702 may comprise information that fingerprint #1 is located 1 inch to the left and 1 inch above (or x pixels to the left and x pixels above) fingerprint #2, 2 inches to the left and 1 1/2 inch above (or y pixels to the left and z pixels above) fingerprint #3, and so on. Each finger identified by its fingerprint will have its relative position mapped to all other fingers.

At a future time a user may manually map functions/actions to a finger or to a combination of fingers. For example, thumb = action1, index finger = action2, thumb + index finger = action3, middle finger = action4, index + middle finger = action5, etc. (Actions may simply be the placement of UI elements). These associations are stored in memory 104.

When using device 100, a user can touch the screen at any contact point with any predefined combination of fingers. If contact module 138 properly decodes all the fingerprints at each point which was touched, it instructs CPU 106 to execute the mapped/associated function. If contact module 138 detects the touch, but can't unambiguously decode all fingerprints, it matches the detected fingerprints to the fingerprint map. This is illustrated at 703 and 704.

As shown at 703, three fingers are in contact with screen 126. Contact module was able to determine the identity of finger 1 and finger 4 through their fingerprints. However, an unknown finger (i.e., the fingerprint was unavailable or ambiguous) was detected between finger 1 and finger 4. In order to determine the identity of the unknown finger, map 702 is utilized. This is illustrated at 704. In one embodiment of the present invention, a best physical fit to map 702 is used to determine the unknown finger. In this case, when map 702 is overlaid with the fingerprint pattern at 703, the unknown finger is best identified as finger 3 since finger 3 is the closest finger from map 702. It should be noted that a best fit to map 702 may take place by any technique. These techniques include, but are not limited to a simple overlay of map 702 on a detected finger pattern, stretching or shrinking map 702 to best fit a detected finger pattern, rotating map 702 to best fit a detected finger pattern, ... , etc. Once the finger pattern is identified, an appropriate action can then be executed by CPU 106.

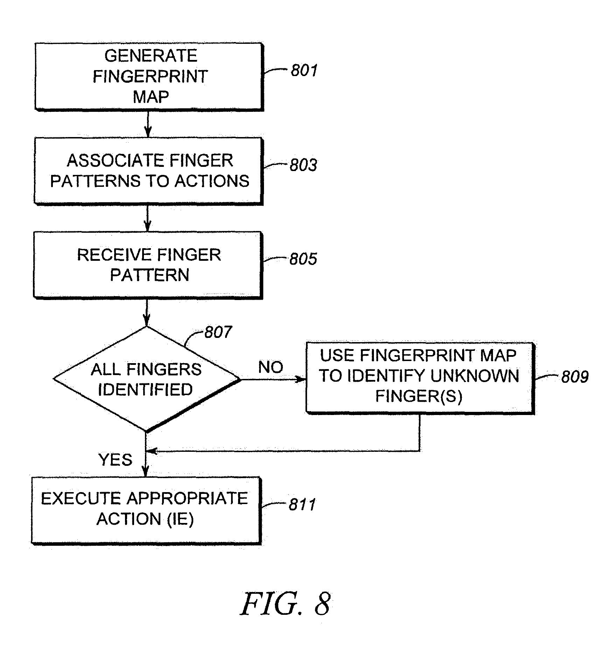

FIG. 8 is a flow chart showing identifying fingers in contact with a touch screen. The logic flow begins at step 801 where contact module 138 generates and stores fingerprint map 702. As discussed above, the fingerprint map comprises fingerprint information and relative position of each finger with respect to each other. Finger patterns are then associated with user interface elements/actions/applications (step 803). This step may be accomplished by CPU 106 during a device training session as is known in the art. The associations may then be stored in memory 104.

At a later time a finger pattern is detected by contact module 138 (step 805). At step 807 contact module determines if all fingers making contact with screen 126 within a predetermined time period have been identified. If so, the logic flow continues to step 811 where an appropriate interface element/action/application is executed.

If, however, at step 807 all fingers have not been identified, the logic flow continues to step 809 where the unidentified finger(s) is identified by contact module 138. More particularly, map 702 will be overlaid on the received finger pattern, and a best fit will be made of the detected finger pattern to map 702. It should be noted, that in the case where no fingerprints are identified, only position data will be used from map 702 during a best fit of the detected finer pattern to map 702. The logic flow then continues to step 811.

The above process results in a method for identifying fingers in contact with a touch screen. During operation a contact module within a touch screen device will generate a fingerprint map comprising fingerprints for a plurality of fingers and relative positions of the plurality of fingers with respect to each other. An association of a finger touch patterns on the touch screen to functions/actions will also be taken. When a finger touch pattern is received on the touch screen, a subset of fingers making contact with the touch screen will be identified by their fingerprints. If it is determined that that some of the fingers in the finger touch pattern are unidentified then the fingerprint map will be used along with the identified fingers contact locations to identify the unidentified fingers.

The step of associating fingerprint patterns to actions may comprise associating a finger pattern making contact with the touch screen to an execution of a particular function, application, or program. Also, the step of using the fingerprint map and the identified fingers contact locations to identify the unidentified fingers may comprise the step of performing a best fit of the identified and unidentified fingers to the fingerprint map.

The step of using the fingerprint map and the identified fingers contact locations to identify the unidentified fingers may comprise overlaying the map onto the fingerprint pattern, best fitting the over-laid map to the received fingerprint pattern, and determining the identities of the unidentified fingers by associating the unidentified fingers with a closes finger of the over-laid map.

It should be noted that identifying fingers based on their fingerprint may be computationally complex and require a large amount of device resources. With this in mind, in an alternate embodiment of the present invention, contact module may first try to determine which finger touched the screen by checking the finger position based on the fingerprint map only. If this result is unambiguous, then no fingerprint data needs to be acquired and the appropriate action may be taken. However, if the fingerprint positions based on the fingerprint map are ambiguous, then an attempt to acquire fingerprints and the above-described technique may be executed. Thus, prior to identifying the subset of fingers making contact with the touch screen by their fingerprints, an attempt may be made to identify all fingers in contact with the touch screen using only the fingerprint map.

Those skilled in the art will further recognize that references to specific implementation embodiments such as "circuitry" may equally be accomplished via either on general purpose computing apparatus (e.g., CPU) or specialized processing apparatus (e.g., DSP) executing software instructions stored in non-transitory computer-readable memory. It will also be understood that the terms and expressions used herein have the ordinary technical meaning as is accorded to such terms and expressions by persons skilled in the technical field as set forth above except where different specific meanings have otherwise been set forth herein.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims including any amendments made during the pendency of this application and all equivalents of those claims as issued.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a", "has ... a", "includes ... a", "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method for identifying fingers in contact with a touch screen, the method comprising the steps of:
a contact module within a touch screen device generating a fingerprint map comprising fingerprints for a plurality of fingers and relative positions of the plurality of fingers with respect to each other;
associating finger touch patterns on the touch screen to functions/actions;
receiving a finger touch pattern on the touch screen;
identifying a subset of fingers making contact with the touch screen by their fingerprints;
determining that some of the fingers in the finger touch pattern are unidentified;
using the fingerprint map and the identified fingers contact locations to identify the unidentified fingers; and
executing a function/action associated with the particular finger pattern.

2. The method of claim 1 wherein the step of associating fingerprint patterns to actions comprises the step of associating a finger pattern making contact with the touch screen to an execution of a particular function, application, or program.

3. The method of claim 1 wherein the step of using the fingerprint map and the identified fingers contact locations to identify the unidentified fingers comprises the step of performing a best fit of the identified and unidentified fingers to the fingerprint map.

4. The method of claim 1 wherein the step of associating finger touch patterns on the touch screen to functions/actions comprises the step of associating a particular finger pattern to a particular function/action.

5. The method of claim 1 wherein the step of using the fingerprint map and the identified fingers contact locations to identify the unidentified fingers comprises the steps of:
overlaying the map onto the fingerprint pattern;
best fitting the over-laid map to the received fingerprint pattern; and
determining the identities of the unidentified fingers by associating the unidentified fingers with a closes finger of the over-laid map.

6. The method of claim 1 further comprising the step of:
prior to identifying the subset of fingers making contact with the touch screen by their fingerprints, attempting to identify all fingers in contact with the touch screen using only the fingerprint map.

7. An apparatus for identifying fingers in contact with a touch screen, the apparatus comprising:
a contact module within a touch screen device generating a fingerprint map comprising fingerprints for a plurality of fingers and relative positions of the plurality of fingers with respect to each other;
logic circuitry associating finger touch patterns on the touch screen to functions/actions;
the contact module receiving a finger touch pattern on the touch screen, identifying a subset of fingers making contact with the touch screen by their fingerprints, determining that some of the fingers in the finger touch pattern are unidentified, using the fingerprint map and the identified fingers contact locations to identify the unidentified fingers; and
the logic circuitry executing a function/action associated with the particular finger pattern.

8. The apparatus of claim 7 wherein associating fingerprint patterns to actions comprises associating a finger pattern making contact with the touch screen to an execution of a particular function, application, or program.

9. The apparatus of claim 7 wherein using the fingerprint map and the identified fingers contact locations to identify the unidentified fingers comprises performing a best fit of the identified and unidentified fingers to the fingerprint map.

10. The apparatus of claim 7 wherein associating finger touch patterns on the touch screen to functions/actions comprises associating a particular finger pattern to a particular function/action.

11. The apparatus of claim 7 wherein using the fingerprint map and the identified fingers contact locations to identify the unidentified fingers comprises overlaying the map onto the fingerprint pattern, best fitting the over-laid map to the received fingerprint pattern, and determining the identities of the unidentified fingers by associating the unidentified fingers with a closes finger of the over-laid map.

12. The apparatus of claim 7 wherein the contact module prior to identifying the subset of fingers making contact with the touch screen by their fingerprints, attempts to identify all fingers in contact with the touch screen using only the fingerprint map.
